(19) Europäisches Patentamt / European Patent Office / Office européen des brevets

(11) **EP 1 835 154 B1**

(12) **EUROPEAN PATENT SPECIFICATION**

(45) Date of publication and mention of the grant of the patent:
**14.10.2020 Bulletin 2020/42**

(21) Application number: **07103813.7**

(22) Date of filing: **09.03.2007**

(51) Int Cl.:
*F02P 5/04* (2006.01)  *F02P 5/15* (2006.01)
*F02D 41/02* (2006.01)  *F02D 37/02* (2006.01)
*F02D 3/04* (2006.01)  *F02D 41/06* (2006.01)
*F02D 35/00* (2006.01)  *F02D 11/10* (2006.01)

(54) **Electronic control, system for carburettor-supplied, controlled-ignition, internal-combustion engines**

Elektronische Steuerung, System für vergasergetriebene Verbrennungsmotoren mit Kontrolle des Zündzeitpunktes

Contrôle électronique, système pour moteurs à carburateur, à allumage commandé, et à combustion interne

(84) Designated Contracting States:
**ES FR IT**

(30) Priority: **16.03.2006 IT MI20060483**

(43) Date of publication of application:
**19.09.2007 Bulletin 2007/38**

(73) Proprietor: **DELL'ORTO S.P.A.**
**20038 Seregno (Monza Brianza) (IT)**

(72) Inventors:
• **Dell'Orto, Pierluigi**
**20045, Besana Brianza (Milano) (IT)**
• **Colombo, Paolo**
**22040, Lurago D'Erba (Como) (IT)**

(74) Representative: **Faggioni, Carlo Maria et al**
**Fumero S.r.l.**
**Pettenkoferstrasse 20/22**
**80336 München (DE)**

(56) References cited:
EP-A- 0 297 670  EP-A- 0 411 283
EP-A- 1 277 939  EP-A2- 1 266 787
DE-B- 1 278 173  US-A- 4 344 397
US-A- 4 446 832  US-A- 5 031 593
US-A- 5 050 553  US-A- 5 284 113
US-B1- 6 298 824

## Description

The present invention concerns an electronic control system for the preparation, dosing and ignition of the air-fuel mixture in internal-combustion engines. In particular, it concerns such a system for carburettor-powered, controlled-ignition, internal-combustion engines.

As known, the majority of small internal-combustion engines (typically for motorcycles and scooters) is currently controlled-ignition, with either a 2-stroke or a 4-stroke cycle, and it employs the conventional carburettor supply system and ignition systems with a fixed spark advance value. These means for controlling engine operation, however, are unsuitable for effective improvement of fuel consumption, of performances, and of driveability in adverse environmental conditions.

On the other hand, the ever-increasing need to reduce as far as possible also polluting emissions, in order to meet very strict environmental protection requirements, must be borne in mind, in particular according to the contents of the Euro2-Euro4 rules.

With conventional carburettor supply systems no satisfactory solutions have been found yet.

In order to improve control of the carburettors mounted on these types of engines, which control was traditionally accomplished entirely by mechanical systems, it has already been attempted to use electronic control units.

These units, by reading and analysing a certain number of operation parameters, are arranged to adjust in an optimised manner the drive of a series of actuation devices which establish the dosing of the fuel mixture and combustion conditions.

In particular, carburettors having a secondary air duct (bypass air) have been suggested, whose flow may be controlled in various ways through electric devices, such as solenoid valves. So far these systems have not become established because, despite a higher level of construction complexity, the control means used were not particularly accurate and the control strategies adopted were limited.

According to the prior art, sometimes an oxygen sensor (the so-called lambda probe) introduced in the exhaust system has also been used, which analyses exhaust gases and supplies the electronic control unit with a series of detected values, which allows the same unit to assess the operation conditions of the engine and to perform correction operations on the carburettor, so as to bring the quality of exhaust gases back to the desired values. Examples of such systems are described in US 3 759 232 and US 5 575 268.

Such a solution, however, is very burdensome, both due to the need of using a probe which is costly per se, and due to the complexity of data processing and of the subsequent operations which need to be implemented for effective control.

On the other hand, the electronic injection systems commonly mounted on motor vehicles - which would allow to partly improve the aspects set forth above - are not suited to the use on small engines, due to the complexity of such systems, to the cost, to the bulk, to the power consumption and to the investments required to customise existing small engines. Among other things, commonly-used electronic injection systems need a fuel supply pump which has a certain bulk, cost and power consumption which are not sustainable in small, controlled-ignition engines, such as scooters, light motorbikes, off-road motorbikes, low-powered motorbikes, outboard engines, gardening and farming equipment, motor generators and more.

Other examplea of control system for combustion engine, which combine the control of the fuel mixture and the ignition timing, are shown in EP1277939A2, US5031593A, US4446832A and US6298824B1.

The scope of the present invention is hence that of providing a combustion control system for controlled-ignition engines, which overcomes the mentioned drawbacks and which is simpler and easier to control, hence cheaper both in terms of construction and of power, as well as being suited to reduce to a minimum polluting emissions. In particular, the objects which the Applicant has set itself in order to achieve the above-mentioned results are of

- accurately managing the fuel mixture and the ignition spark advance to control the composition and temperature of exhaust gases so as to reduce the starting times of the catalytic converter and to maximise the efficiency of the catalytic conversion of pollutants;
- finely tuning the quantity of delivered fuel and the ignition spark advance, so as to reduce overall fuel consumption;
- adjusting the supply and ignition parameters according to environmental variables, so as to obtain good driveability of the vehicle in any climate condition;
- maximising torque and full load power values across the entire engine operation range;
- implementing a system which limits as far as possible the absorption of electric power, so as to avoid changes to the electric systems of existing carburettor engines and to make the system usable also on applications without electric accumulators; hence allowing manual start of the engine by means of levers or by pulling ropes;
- allowing fuel supply by gravity from the tank or, in the presence of negative hydrostatic heads, by cheap pumps;
- managing the amount of lubricating oil sent to the engine so as to reduce the corresponding consumption, exhaust smokiness, the emissions of unburnt hydrocarbons and of particles, prolonging the duration and efficiency of the catalytic converter.

Such objects are achieved by the system and the corresponding control method described, in their essential features, in the accompanying claims.

In particular, according to the invention it is taught to use an integrated, carburation-and-ignition, electronic control system based on signals coming mainly from an engine shaft revolution sensor and from temperature sensors.

According to a main aspect of the invention, the control of the ignition spark advance and of the air/fuel ratio is carried out according to a basic mapping, which is a function of signals representing the position of the engine shaft over time, and with a correction mapping which is a function of the temperature at least in correspondence of the engine. Such correction mappings establish special control strategies, which correct the effect of the temperature (both the engine local one, and the environmental temperature) and optimise transient operation (start, vehicle accelerations/decelerations, gas control, turning off, ...), to the advantage of driveability in any condition.

Hence, advantageously, the control strategies which may be implemented with the system of the invention provide to establish mappings of the main operation parameters (air/fuel mixture, ignition spark advance and also oil pump) both in normal operation and in start-up conditions.

According to a further aspect of the invention, for applications on vehicles, the operation of the control unit is further based on signals also coming from a vehicle speed sensor and from an engine shaft position sensor (capable of deriving also the rotation speed).

Finally, according to a further variant, the control strategy is implemented also based on the signals coming from a position sensor of the air valve and of the carburettor throttle (if any), of a valve of the engine outlet port, of a reduction valve of the exhaust pipe and other.

Further features and advantages of the invention will in any case be more evident from the following detailed description of some preferred embodiments, given purely by way of a non-limiting example and illustrated in the accompanying drawings, wherein:

fig. 1 is a section view of an electrically-controllable exemplary carburettor;
fig. 2 is a functional diagram of the existing interconnections with the engine control unit in an embodiment of the invention;
fig. 3 is a diagrammatic representation of a realistic arrangement of the sensors illustrated in fig. 2;
fig. 4 is a diagram similar to that of fig. 2, according to another embodiment of the invention;
fig. 5 shows four control curve diagrams according to the invention;
fig. 6 is a functional diagram exemplifying the integrated control according to the invention;
fig. 7 is a functional diagram exemplifying the oil pump control according to the invention;
fig. 8 is a diagram which illustrates, in an exemplary way, a linear-decay correction control; and

fig. 9 is a flow diagram of the intervention strategy of the "start-up" mapping according to the invention.

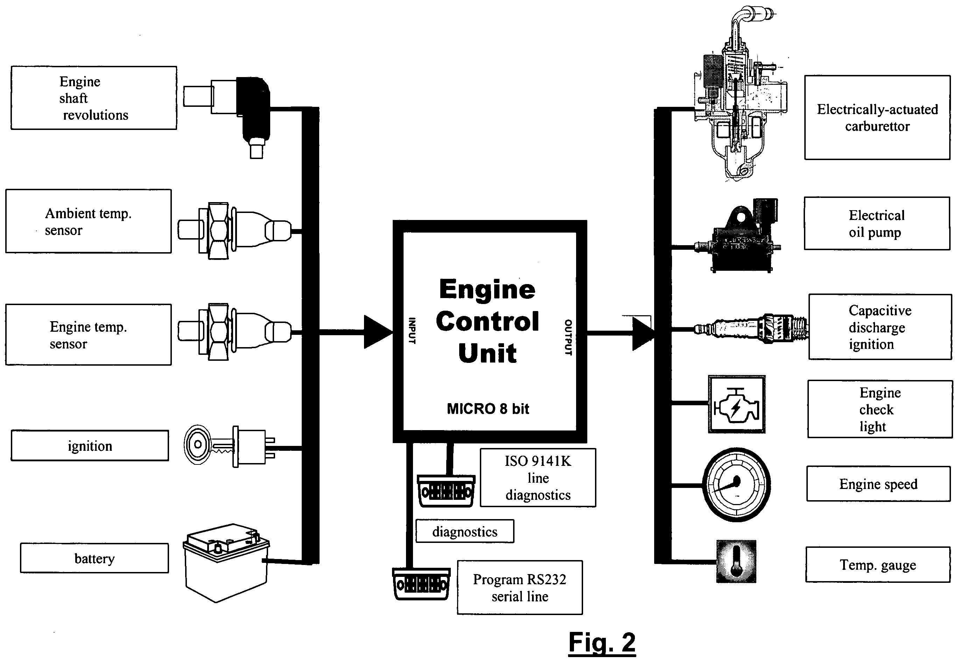

As shown in fig. 2, a control system of a carburettor vehicle substantially comprises a central electronic control unit - equipped with a logic unit wherein control strategies are implemented (through a suitable software and/or firmware) - a series of sensors for the detection of the fundamental operation parameters and a series of actuators which are diagrammatically clearly identified in the drawing.

In particular, fig. 2 shows five sensors, known per se, which detect the number of revolutions of the engine shaft, the room temperature, the engine temperature, the ignition contact, and the battery voltage, respectively. On the right hand side of the drawing there are illustrated instead the devices which pick up the outgoing signals from the engine control unit, transforming them into indications for the user or controls for actuating devices: for example the carburettor or throttle body, the oil pump for the fuel mixture, the ignition for the spark plugs, the engine condition warning lights, the engine revolution counter and temperature thermometers.

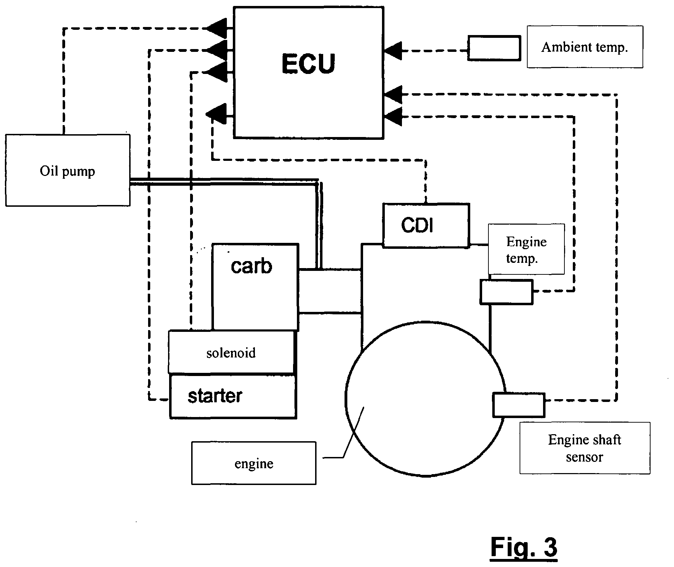

The relative arrangement of the various devices and sensors is diagrammatically exemplified in fig. 3. As shown, for example, the room temperature sensor is preferably integrated in the electronic control unit.

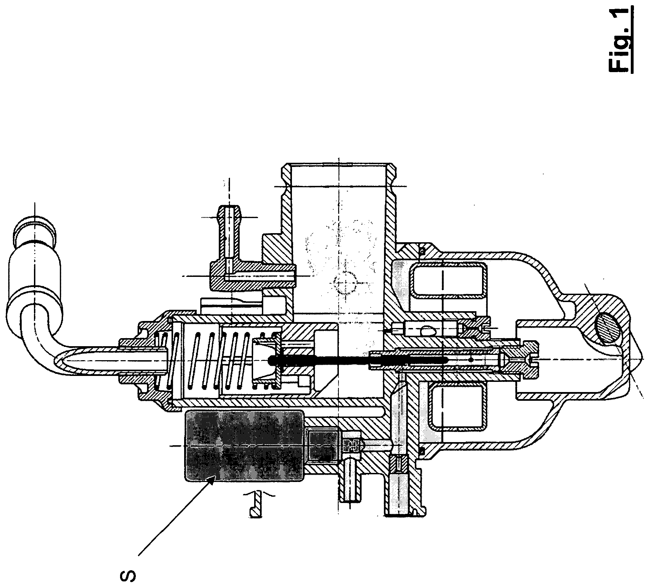

A carburettor (known per se) which may be controlled electronically is exemplarily illustrated also in fig. 1. Typically, this carburettor has one or more solenoid actuators for controlling the A/F (air/fuel) ratio of the mixture, acting on the additional (emulsion) air circuit in addition to the main (emulsion) air and on a secondary air circuit (bypass). In fig. 1 the solenoid actuator S acting on the secondary air flow can be identified.

The carburettor is further provided with an electric starter device, for controlling the A/F ratio during the start-up phases, whose peculiarities will be described further on.

Although not illustrated in detail, the system controls in an integrated way also an electric oil pump, itself provided with a solenoid actuator, suitable for fine tuning the amount of oil supplied to the fuel mixture for engine lubrication.

Moreover, the system is preferably equipped with variable-advance and controllable-advance capacitive discharge ignition (CDI), although also simpler inductive discharge ignitions may also be used.

The system of the invention is extremely simple and, even forfeiting complex detection devices or actuators, it allows to obtain an excellent adjustment of the operation parameters along the lines set forth in the preliminary remarks.

In short, the strategy of the invention provides to obtain an integrated control of the main functions, at least of the advance, carburettor (A/F) and oil pump, setting a basic adjustment, according to the information coming from the sensor on the engine shaft (capable of detecting engine position and speed), to which adjustment suitable corrections are added, determined on the basis of values detected at least by the engine temperature and room temperature sensors.

Among the functions controllable with the system of the invention there are the main ones, such as:

- integrated management of the A/F ratio, ignition spark advance and oil flow rate, according to engine rpm;
- management of the transient phases, in particular of acceleration and deceleration;
- stabilisation of the minimum rpm;
- management of the opening/closing times of the starter device, with rapid activation during the cold start up phases and with slow activation during the warm start up phases;
- ignition adjustment, upon increase of the temperature of burnt gases;
- management of the ignition in the "cranking" phase;

and a series of secondary functions, such as:

- corrections of the control according to engine temperature;
- corrections of the control according to room temperature;
- management of the control according to the vehicle speed limitation;
- management of the control according to noise reduction requirements.

Through an integrated control it is possible to optimise performance and drivability, improve operation at start-up, reduce polluting emissions, also through catalyser activation improvement, if provided, which can consequently be a simplified version.

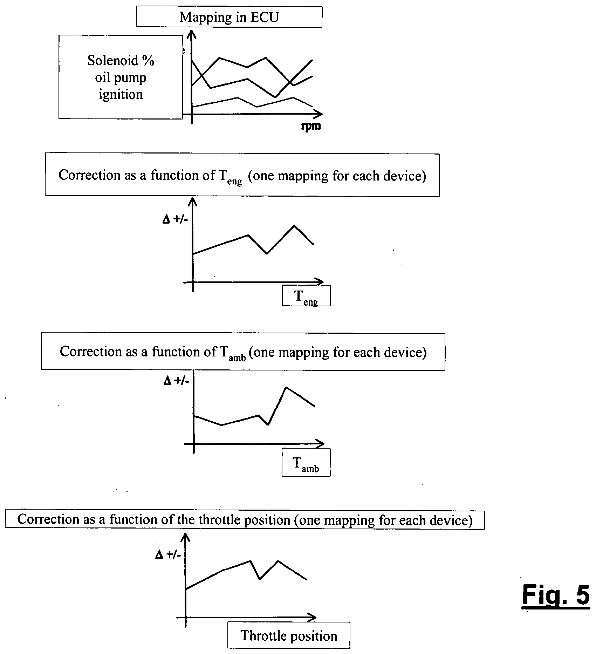

As can be seen in fig. 5, according to what has been mentioned above, the control is carried out in an integrated manner, due to the fact that the logical unit is implemented in a single electronic control unit, combining the basic mapping with various corrective mappings or tuning mappings determined according to secondary parameters, such as engine temperature, room temperature, throttle valve position, and so on.

For the basic mapping, depending on the specific application, the ratio between the control of the bypass air valve or of the ignition spark advance to the number of engine revolutions (RPM) is defined.

Preferably, the integrated control system acts on the carburettor controlling the bypass valve solenoid through pulse width modulation (PWM) techniques.

More specifically, the spark advance (adv) controls and carburettor PWM controls are a variable function of RPM, of its time derivative (dRPM/dt), as well as of the engine temperature (Teng) and of the room temperature (Tamb). Advantageously, these functions allow to adjust the operation parameters taking into account the desired A/F strategy and the corrections required to compensate for low operation temperatures.

As already mentioned, such functions are preferably determined by a basic mapping, exclusively connected to the RPM parameter, plus an incremental or correction mapping which takes into account the other three parameters (dRPM/dt; Teng; Tamb). The values of the incremental mapping, or function, $\Delta\%$ are preferably recalculated every 10 engine revolutions, at the most, and are programmable.

The input values of the PWM/adv functions can be set according to discrete steps, for example every 50 rpm for a total of 16 (Map16) breakpoints; between the various points a linear interpolation of the PWM/adv functions may be used.

Also the input values of Tamb and Teng to perform the calculation (of the correction mapping) can be considered in discrete steps, without any interpolation being necessary between these discrete values. For example, a maximum of 10 discrete values can be considered (Map10): such values, which may be programmed in the electronic unit according to the application, are the same for the three functions which adjust the spark advance, the bypass air valve and, possibly, the oil pump.

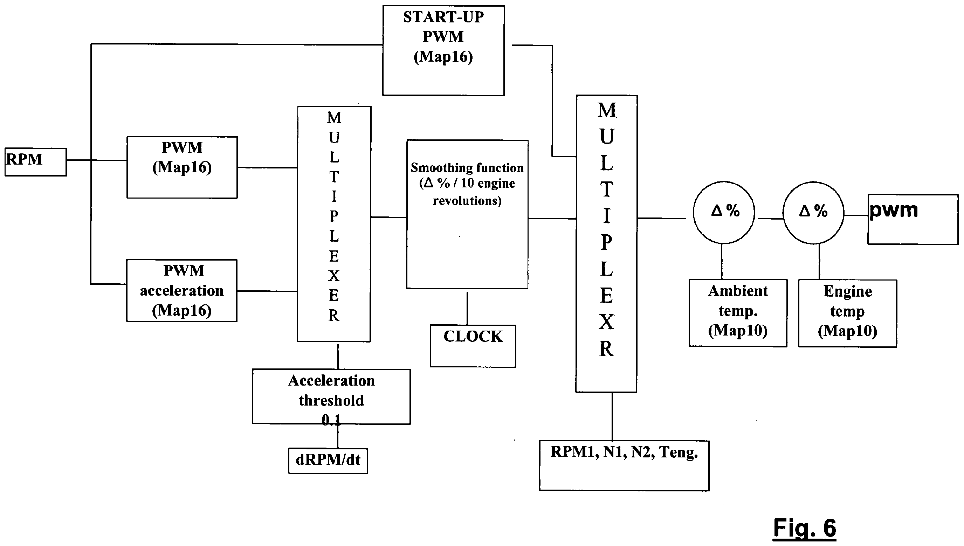

Fig. 6 diagrammatically shows a functional diagram illustrating this type of control.

In the upper diagram of fig. 5 a basic mapping is shown instead exemplifying the integrated control acting on the solenoid of the additional emulsion air of the carburettor (in terms of the opening percentage), on the oil pump and on the ignition spark advance, all depending on a single parameter, i.e. the number of engine revolutions (RPM).

In the other diagrams at the bottom of fig. 5, the correction curves ($\Delta\%$) of one of the controls in the basic mapping are shown, as a function of secondary parameters, i.e. of the engine temperature, of the room temperature and of the throttle valve position, respectively. For each of the controls found in the basic mapping these correction curves are determined depending on the secondary parameters.

One of the parameters which comes into play in the determination of incremental mapping, as seen above, is dRPM/dt.

For such purpose, the engine revolution speed is determined on the basis of the signal coming from a sensor detecting the transit of a reference index integral with the engine shaft. The signal, suitably filtered to remove noise and interferences, is then processed by the engine control unit in order to determine the engine revolution speed starting from the revolution period. The unit also calculates the time derivative of the engine speed (acceleration).

The engine speed derivative is further used for taking into account the non-stationary, acceleration and deceleration conditions. Should the value of the derivative lie above certain acceleration or deceleration thresholds, a correction of the ignition advance and carburation parameters is imparted, so as to adapt the engine operation parameters to the requirements of the operation in rapidly changing conditions, for which the mapping performed for the stationary operation would be unsuitable. Intervention thresholds for said correction are values which can be programmed according to the application, i.e. which may be set up in the calibration software.

Such corrective intervention is linearly reduced according to the time or number of revolutions (values may be adjusted at wish), so that the values of the basic mapping are re-established after a while.

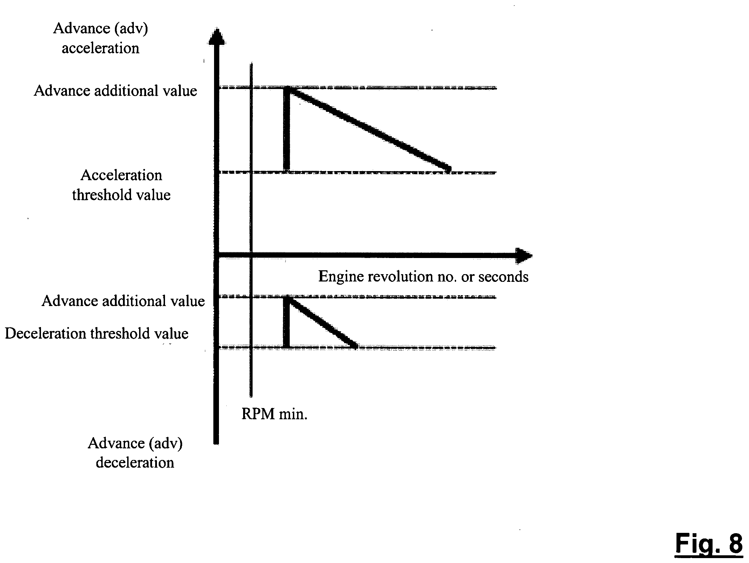

In such respect, fig. 8 shows an exemplary diagram, which allows to better understand the application of the correction function to the overcoming of certain acceleration/deceleration thresholds and the linear decay thereof, according to the time or number of revolutions.

The revolution period detected by the engine control unit can also be used for assessing the cyclic revolution irregularity of the engine and- upon exceeding set irregularity thresholds - implement corrections of the spark advance and carburation in order to reestablish regular engine operation.

Depending on the desired control, also further secondary control parameters can be used.

For example, in the application to vehicles equipped with multiple gear, the system can advantageously provide to consider, in the control strategy, not only the signals representing the accelerator or throttle position (TPS), but also the vehicle speed, as will be better highlighted hereinafter.

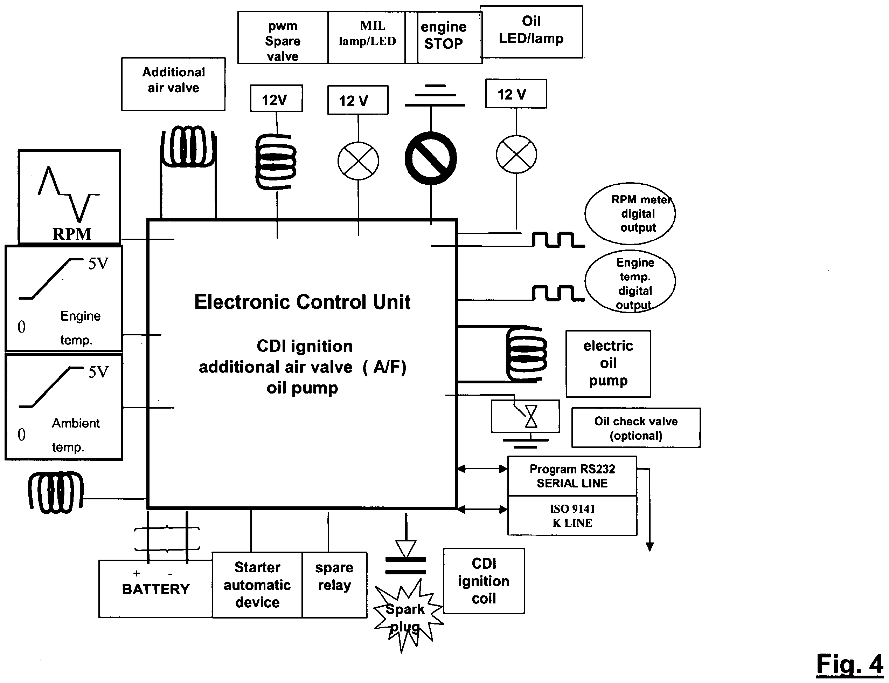

Fig. 4 shows a functional diagram of an engine control unit devised according to what has been described so far.

According to a preferred operation mode, the invention system is capable of brilliantly coping also with transient phases of engine start up, especially cold start up which is particularly critical for the proper activation of the catalyser system and hence for polluting emissions.

During this phase the system also provides to the control of the automatic starter supply (specifically of the heating element contained therein, which can be of any known type, for example a wax one) PWM modulating the supply voltage; using a strategy which prolongs the exclusion times of the automatic starter in the presence of room and/or engine temperatures below preset temperature thresholds (conditions which pose the risk of ice formation in the carburettor ducts), so as to guarantee an optimal drivability also with rigid climates but avoiding polluting emissions and an excessive consumption in normal operation conditions.

According to the invention, the system provides various adjustable thresholds of room temperature, associated with PWM drive signals having different features.

The system itself further allows to quickly exclude the starter device if, even with a rigid climate, the engine is already warm due to previous use, always for the purpose of optimising driveability and catalyser effectiveness, avoiding polluting emissions and excessive consumption during repeated start ups with a warm engine in a cold climate.

Specifically, the condition of repeated start up with a warm engine in a cold environment is detected as the exceeding of a set programmable engine temperature threshold. Upon exceeding said threshold, the drive value provided for the higher room temperature conditions is used.

According to this preferred embodiment, the system of the invention enables a quick triggering of the catalyser with a cold engine, which is achieved by setting a specific mapping for carburation control (PWM on air solenoid and starter), ignition and lubrication, so as to increase the temperature of exhaust gases during the first few minutes of operation, reducing to a minimum the enrichment for cold operation and the amount of lubricant introduced. Such specific "start-up" mapping is maintained for a set number of revolutions - hence of engine combustion cycles - within which the catalytic converter begins to operate in a steady state.

In other words, according to this embodiment, the general control strategy provides to distinguish between two mapping conditions, one in a "standard" or "basic" condition, and the other in a condition of quick catalyser triggering, i.e. of "start-up". In particular, a "standard" mapping - said mapping establishing the spark advance, carburation and lubrication parameters in normal operation conditions - and a "start-up" mapping - establishing the spark advance, carburation and lubrication parameters when a start-up condition is detected - are implemented in the engine control unit.

The application of one mapping or the other is determined on the basis of the value taken up by a certain number of quantities acquired during operation. In particular, according to the invention, the following are considered:

- RPM1: maximum rpm (revolutions per minute) value for applying the start up mapping;
- N1:number of engine revolutions performed before applying the start-up mapping;
- N2:number of engine revolutions performed before returning to the spark advance mapping in standard conditions;

- N3:number of engine revolutions performed before returning to the standard lubrication adjustment;
- T1: engine temperature lower limit above which the start up mapping is used;
- T2: engine temperature upper limit beyond which the mapping in standard conditions is used.

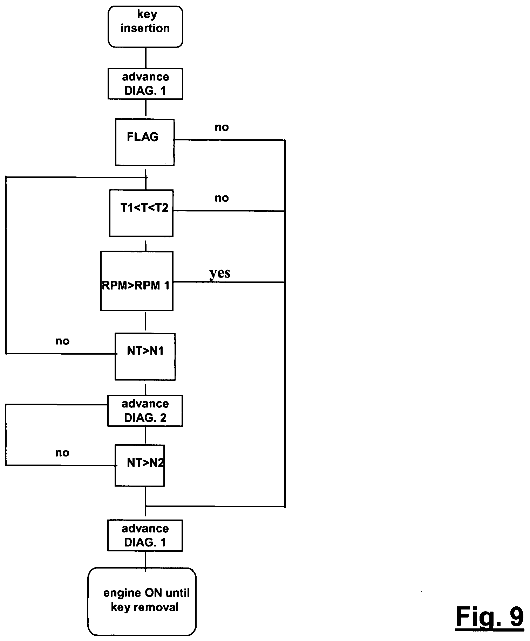

For greater clarity, fig. 9 shows the flow diagram of such strategy.

Preferably, as already mentioned, for better control during the cold start up step, the carburettor is equipped also with a thermosensitive heating element, which has a positive resistance coefficient depending on the temperature. This heating device reduces the formation of petrol vapour condensate on the cold walls of the carburettor supply ducts and further prevents the formation of ice in said ducts, which may occur in cold and damp climate conditions. The heating device is powered by the engine control unit if the room temperature is below a programmable threshold. Above such threshold, the heating device is deactivated, so as to restore a more advantageous electric equilibrium and avoid opposite undesirable phenomena, for example vapour-lock.

As mentioned, in the "start-up" phase, a specific control mapping also for the oil pump is advantageously set up and followed.

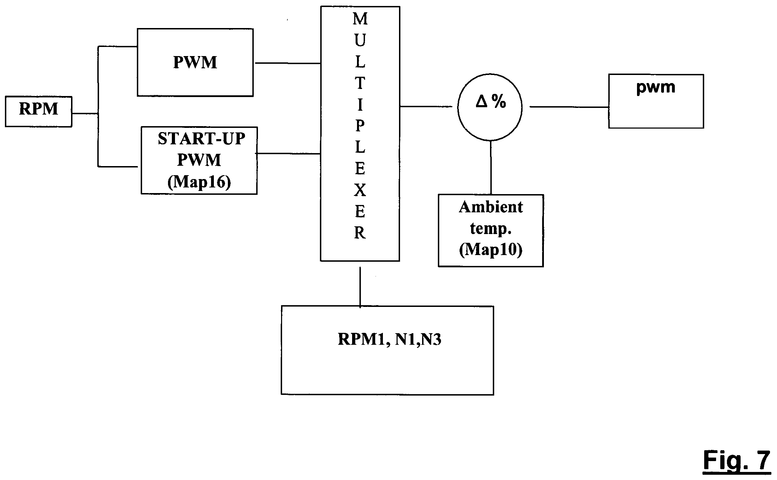

Fig. 7 diagrammatically shows an exemplary functional diagram which defines how the PWM to be used for the oil pump is calculated.

In this case, a possible simple strategy is that of detecting when

$$N1 < NT$$

after which, the start-up mapping of the PWM control is to be applied to the oil pump until

$$NT < N3$$

after which the basic mapping must be used again.

As stated above, the control system of the invention preferably uses as a parameter also the speed ratio (gear) entered. As a matter of fact, according to the inserted gear, specific ignition and carburation mappings are simultaneously adopted, so as to improve vehicle performance and driveability depending on the torque load opposing vehicle advancement.

In order to acquire the inserted gear instead, without applying a suitable (electromechanical) sensor (which would imply extra costs and maintenance expenses), according to the invention it is provided to advantageously calculate such value through the combined processing of the engine speed signals and of the vehicle speed signals, which signals are already available to the control unit through the revolution sensor of the engine shaft and a further speedometer device.

In particular, through the vehicle speed/engine rpm ratio, the inserted gear can be obtained. Based on such ratio (calculated in steps so as to identify a discrete number of values representing the various gears) specific ignition and carburation mappings are selected.

Finally, the variable control of the ignition spark advance can further be employed for controlling the minimum rpm in a closed loop (feedback) with a derivative-type adjustment. In substance, if the minimum rpm tends to grow, the spark advance value is reduced, so as to curb power and hence slow down the engine. Viceversa, if the minimum rpm tends to dwindle, the spark advance value is increased so as to boost power and increase revolution speed.

From what can be inferred above, the objects set forth in the preliminary remarks are perfectly achieved by the system according to the invention.

As a matter of fact, due to the system and to the integrated control method of the invention, a series of functions of a carburettor engine can be adjusted in an efficient, integrated and coordinated manner, with advantages in terms of operation regularity and efficiency at all rpms and in all climate conditions, hence reducing consumption and polluting emissions. On the other hand, the control system of the invention resorts to easily readable and derivable operation parameters, eliminating the use of complex components (such as lambda probes) and reducing power consumption, to the unquestionable benefit in terms of costs and ease of installation.

Moreover, the peculiar integrated control of functions, as achieved through the engine control unit of the invention, allows an advantageous combined optimisation, which could not be obtained with known control systems which are dedicated for each specific function. There derives also the opportunity of defining all the provided control mappings in an experimental phase, or at line end, or possibly post-sale, for customisation, in a single operation. Moreover, the different operation variables are processed by a single control system, without having to be replicated and sent to different units, and that allows a simultaneous, synchronised and adequate control of the provided functions, avoiding deviations between the same due to the processing of said variables in different ways; the integrated control allows to have smooth and regular calibration, diagnosis and operation logics in the presence of faults, which are impossible with separate and mutually independent controls.

It is intended, however, that the invention is not limited to the particular embodiments illustrated above, which represent only non-limiting examples of the scope of the invention, but that a number of modifications is possible, all within the reach of a person skilled in the field, without departing from the scope of the invention as defined in the appended claims.

**Claims**

1.    An electronic control system in a controlled-ignition, carburettor-supplied, internal combustion engine of a motor vehicle, of the type comprising a central control unit wherein control strategies are implemented to drive at least an electrovalve device, **characterized in that** said electrovalve device (S) is for the adjustment of the emulsion air in secondary emulsion air circuit of a carburettor which determines the air/fuel ratio of the fuel mixture, and said control strategies are implemented also to drive an adjustable spark advance ignition device, wherein said control strategies are integrated and performed according to a basic mapping, function of signals representing the position of the engine shaft over time, and to correction mappings (A%), function at least of secondary parameters being the temperature in correspondence of the engine (Teng) and the position of the throttle adjusting device (TPS), said correction mappings (A%) being recalculated at discrete intervals, at most every 10 engine revolutions, and the input value of said secondary parameters being considered in discrete steps.

2. The system as claimed in claim 1), wherein said control strategies are integrated also with the control of an oil pump device which feeds oil to a fuel mixture for the engine.

3. The system as claimed in claim 1) or 2), wherein said basic mapping is a function of the engine revolution speed (RPM).

4. The system as claimed in any one of claims 1) to 3), wherein correction mapping ($\Delta$%) is a function also of signals representing the room temperature (Tamb), so as to optimise the operation of the engine in the different environmental conditions.

5. The system as claimed in any one of claims 1) to 4), wherein said correction mapping ($\Delta$%) is a function also of the derivative of the revolution speed of the engine shaft over time (dRPM/dT).

6. The system as claimed in any one of the preceding claims, wherein said electrovalve for the control of carburation is driven by modulating the duration of the application of the supply voltage to a solenoid within a preset period at constant frequency (PWM) .

7. The system as claimed in any one of the preceding claims, wherein standard basic mappings and at least further start-up mappings for the start-up phases are provided in said control unit, said start-up mappings being functions of signals representing at least the number of the combustion cycles, of the engine revolution speed and of the engine temperature.

8. The system as claimed in claim 7), wherein said start-up mapping is set up when the engine revolution speed (RPM) is lower than a preset threshold (RPM1) and the engine temperature (Teng) lies within a preset range of temperatures (T1-T2).

9. The system as claimed in claim 7) or 8), wherein said start-up mappings include also the control of a heating wax element of an automatic starter supply of the carburettor, which is controlled with a PWM method.

10. The system as claimed in claim 9), wherein said heating device comprises a thermosensitive element which has a positive resistance-to-temperature ratio.

11. The system as claimed in any one of the preceding claims, wherein said secondary parameters include also a signal representing the inserted gear of the motor vehicle.

12. The system as claimed in claim 11), wherein the detection of the inserted gear is based on the ratio of a first signal representing the vehicle advancement speed to a second signal representing the engine revolution speed (RPM).

**Patentansprüche**

1. Ein elektronisches Steuerungssystem in einem mit gesteuerter Zündung versehenen, vergasergespeisten Verbrennungsmotor für ein Kraftfahrzeug, des Typs mit einer zentralen Steuereinheit, in der Steuerstrategien implementiert sind, um mindestens eine Elektroventileinrichtung anzusteuern, **dadurch gekennzeichnet, dass** die Elektroventileinrichtung (5) für die Einstellung der Emulsionsluft im Luftkreislauf der Sekundäremulsion eines Vergasers dient, der das Luft/Kraftstoff-Verhältnis des Brennstoffgemischs bestimmt, wobei die genannten Steuerstrategien auch zur Ansteuerung einer Zündeinrichtung mit einstellbarer Vorzündung implementiert sind, wobei die Steuerstrategien integriert sind und durchgeführt werden gemäß einer Grundabbildung, eine Funktion von Signalen, die die Position der Motorwelle über der Zeit repräsentieren, und gemäß Korrekturabbildungen (A %), eine Funktion zumindest von sekundären Parametern, die die Temperatur in Entsprechung des Motors (Teng) und die Position der Drosselklappen-Einstelleinrichtung (TPS) sind, wobei die Korrekturabbildungen (A %) in diskreten Intervallen, höchstens alle 10 Motorumdrehungen, neu berechnet werden und der Eingangswert der sekundären Parameter in diskreten Schritten berücksichtigt wird.

2. System nach Anspruch 1, bei dem die Steuerstrategien auch mit der Steuerung einer Ölpumpe integriert sind, die Öl in ein Kraftstoffgemisch für den Motor einspeist.

3. System nach Anspruch 1 oder 2, bei dem die Grundabbildung eine Funktion der Motordrehzahl (RPM) ist.

4. System nach einem der Ansprüche 1 bis 3, wobei die Korrekturabbildung (A%) auch eine Funktion von Signalen ist, die die Raumtemperatur (Tamb) repräsentieren, so dass der Betrieb des Motors in den verschiedenen Umgebungsbedingungen optimiert wird.

**5.** System nach einem der Ansprüche 1 bis 4, wobei die genannte Korrekturabbildung (A%) auch eine Funktion der Ableitung der Drehzahl der Motorwelle über der Zeit (dRPM/dT) ist.

**6.** System nach einem der vorstehenden Ansprüche, wobei das Elektroventil für die Steuerung des Vergaserbetriebs durch Modulation der Dauer der Anwendung der Versorgungsspannung an einer Magnetspule innerhalb einer voreingestellten Periode bei konstanter Frequenz (PWM) angesteuert ist.

**7.** System nach einem der vorhergehenden Ansprüche, wobei Standard-Grundabbildungen und mindestens eine weitere Start-up-Abbildung für die Start-up Phasen in der genannten Steuerungseinheit vorgesehen sind, wobei die Start-up-Abbildungen Funktionen von Signalen sind, die zumindest die Zahl der Verbrennungszyklen, die Motordrehzahl und die Motortemperatur repräsentieren.

**8.** System nach Anspruch 7, bei dem die Start-up-Abbildung eingerichtet wird, wenn die Motordrehzahl (RPM) niedriger ist als ein voreingestellter Schwellenwert (RPM1) und die Motortemperatur (Teng) in einem vorgegebenen Temperaturbereich (TI-T2) liegt.

**9.** System nach Anspruch 7 oder 8, wobei die Start-up-Abbildungen auch die Steuerung eines Heizwachselements einer automatischen Starterversorgung des Vergasers umfasst, die mit einer PWM-Methode gesteuert wird.

**10.** System nach Anspruch 9, bei dem die Heizvorrichtung ein wärmeempfindliches Element umfasst, das ein positives Widerstand-Temperatur-Verhältnis hat.

**11.** System nach einem der vorhergehenden Ansprüche, wobei die sekundären Parameter auch ein Signal umfassen, das den eingelegten Gang des Kraftfahrzeugs darstellt.

**12.** System nach Anspruch 11, bei dem die Erkennung des eingelegten Gangs auf der Grundlage des Verhältnisses eines ersten Signals, das die Fahrzeuggeschwindigkeit darstellt, zu einem zweiten Signal, das die Motordrehzahl (RPM) darstellt, erfolgt.

## Revendications

**1.** Système de contrôle électronique dans un moteur à combustion interne, à allumage commandé, et à carburateur d'un véhicule à moteur, du type comprenant une unité de commande centrale dans lequel des stratégies de commande sont mises en œuvre pour entraîner au moins un dispositif d'électrovanne, **caractérisé en ce que** ledit dispositif d'électrovanne (S) est destiné au réglage de l'air d'émulsion dans un circuit d'air d'émulsion secondaire d'un carburateur qui détermine le rapport air/carburant du mélange de carburant, et lesdites stratégies de commande sont également mises en œuvre pour entraîner un dispositif d'allumage à avance à l'allumage réglable, dans lequel
lesdites stratégies de commande sont intégrées et conduites selon une mise en correspondance de base, en fonction de signaux représentant la position de l'arbre de moteur au cours du temps, et des mises en correspondance de correction (A%), en fonction au moins de paramètres secondaires étant la température correspondante du moteur (Teng) et la position du dispositif de réglage des gaz (TPS),
lesdites mises en correspondance de correction (A%) étant recalculées à des intervalles discrets, au plus tous les 10 tours de moteur, et
la valeur d'entrée desdits paramètres secondaires étant prise en compte dans des étapes discrètes.

**2.** Système selon la revendication 1, dans lequel lesdites stratégies de commande sont en outre intégrées à la commande d'un dispositif de pompe à huile qui alimente de l'huile vers un mélange de carburant pour le moteur.

**3.** Système selon la revendication 1 ou 2, dans lequel ladite mise en correspondance de base est une fonction de la vitesse de rotation du moteur (RPM).

**4.** Système selon l'une quelconque des revendications 1 à 3, dans lequel la mise en correspondance de correction (Δ%) est également une fonction de signaux représentant la température ambiante (Tamb), de façon à optimiser le fonctionnement du moteur dans les différentes conditions environnementales.

**5.** Système selon l'une quelconque des revendications 1 à 4, dans lequel ladite mise en correspondance de correction (Δ%) est également une fonction de la dérivée de la vitesse de rotation de l'arbre du moteur au cours du temps (dRPM/dT).

**6.** Système selon l'une quelconque des revendications précédentes, dans lequel ladite électrovanne pour la commande de carburation est entraînée par modulation de la durée de l'application de la tension d'alimentation à un solénoïde dans une période prédéfinie à fréquence constante (PWM) .

7.  Système selon l'une quelconque des revendications précédentes, dans lequel les mises en correspondance de base standard et au moins les mises en correspondance de démarrage supplémentaires pour les phases de démarrage sont fournies dans ladite unité de commande, lesdites mises en correspondance de démarrage étant des fonctions de signaux représentant au moins le nombre des cycles de combustion, de la vitesse de rotation de moteur et de la température de moteur.

8.  Système selon la revendication 7, dans lequel ladite mise en correspondance de démarrage est mise en œuvre lorsque la vitesse de rotation de moteur (RPM) est inférieure à un seuil prédéfini (RPM1) et la température de moteur (Teng) est située dans une plage prédéfinie de températures (T1-T2).

9.  Système selon la revendication 7 ou 8, dans lequel lesdites mises en correspondance de démarrage comprennent en outre la commande d'un élément de chauffage de cire d'une alimentation de démarreur automatique du carburateur, qui est commandé avec un procédé de modulation de largeur d'impulsions (PWM).

10. Système selon la revendication 9, dans lequel ledit dispositif de chauffage comprend un élément thermosensible qui a un rapport résistance/température positif.

11. Système selon l'une quelconque des revendications précédentes, dans lequel lesdits paramètres secondaires comprennent en outre un signal représentant l'engrenage inséré du véhicule à moteur.

12. Système selon la revendication 11, dans lequel la détection de l'engrenage inséré est basée sur le rapport d'un premier signal représentant la vitesse d'avancement du véhicule à un deuxième signal représentant la vitesse de rotation de moteur (RPM).

Fig. 1

S

Engine
shaft
revolutions

Ambient temp.
sensor

Engine temp.
sensor

ignition

battery

**Engine Control Unit**

INPUT

OUTPUT

MICRO 8 bit

ISO 9141K
line
diagnostics

diagnostics

Program RS232
serial line

Electrically-actuated
carburettor

Electrical
oil pump

Capacitive
discharge
ignition

Engine
check
light

Engine speed

Temp. gauge

**Fig. 2**

EP 1 835 154 B1

EP 1 835 154 B1

**Fig. 3**

EP 1 835 154 B1

Fig. 4

13

| Mapping in ECU |
|---|

Solenoid %
oil pump
ignition

rpm

| Correction as a function of $T_{eng}$ (one mapping for each device) |
|---|

$\Delta$ +/-

$T_{eng}$

| Correction as a function of $T_{amb}$ (one mapping for each device) |
|---|

$\Delta$ +/-

$T_{amb}$

| Correction as a function of the throttle position (one mapping for each device) |
|---|

$\Delta$ +/-

Throttle position

**Fig. 5**

**Fig. 6**

**Fig. 7**

Advance (adv)
acceleration

Advance additional value

Acceleration
threshold value

Engine revolution no. or seconds

Advance additional value

Deceleration threshold value

RPM min.

Advance (adv)
deceleration

EP 1 835 154 B1

**Fig. 8**

EP 1 835 154 B1

key insertion

advance DIAG. 1

FLAG — no

T1<T<T2 — no

RPM>RPM 1 — yes

NT>N1 — no

advance DIAG. 2

NT>N2 — no

advance DIAG. 1

engine ON until key removal

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3759232 A
- US 5575268 A
- EP 1277939 A2

- US 5031593 A
- US 4446832 A
- US 6298824 B1